# EUROPÄISCHE PATENTSCHRIFT

(11) **EP 0 454 281 B1**
(45) Veröffentlichungstag und Bekanntmachung des Hinweises auf die Patenterteilung: **08.02.1995**
(21) Anmeldenummer: 91250106.1
(22) Anmeldetag: 18.04.1991
(51) Int. Cl.: H02G 5/06

(54) **Durchführung für eine gasisolierte Mittel- oder Hochspannungs-Schaltanlage**
Feed-through for gas-insulated, middle or high voltage switchgear
Traversée pour appareil de commutation à moyenne ou haute tension, à isolation gazeuse

(30) Priorität: 27.04.1990 DE 4014005
(43) Veröffentlichungstag der Anmeldung: 30.10.1991
(73) Patentinhaber: SIEMENS AKTIENGESELLSCHAFT, 80333 München (DE)
(72) Erfinder: Poth, Rainer, W-6368 Bad Vilbel (DE)

(56) Entgegenhaltungen:
- DE-A- 3 311 218
- DE-A- 3 334 682
- DE-U- 8 704 976
- PATENT ABSTRACTS OF JAPAN vol. 4, no. 15 (E-170), 5. Februar 1980 ; & JP-A-54 155 495

## Beschreibung

Die Erfindung betrifft eine Durchführung für eine gasisolierte, gekapselte Mittel- oder Hochspannungs-Schaltanlage, mit einem axial in der Kapselung angeordneten spannungführenden Leiter und einer konzentrisch zu diesem isoliert am Durchführungskörper abgestützten Elektrode sowie mit einem nach außen hindurchgeführten Anschlußleiter für die Elektrode.

Beispiele solcher Durchführungen sind beispielsweise der DE-A-2 325 449 zu entnehmen. Die dort beschriebenen Durchführungen sind als kapazitive Spannungswandler ausgebildet. Dies bedeutet, daß die Kapazität der konzentrisch zu dem spannungführenden Leiter angeordneten Elektrode ausreichend hoch sein muß, um die Energie zum Betrieb einer Meßeinrichtung zu liefern. In vielen Fällen ist es ausreichend, eine relativ geringe Energie bereitzustellen, wenn es nur darauf ankommt, eine Anzeigevorrichtung für das Vorhandensein der Spannung zu betätigen. Als Signalgeber hierfür kann beispielsweise eine Glimmlampe eingesetzt werden. Durchführungen für Zwecke dieser Art sind gleichfalls bekannt, z. B. durch die Unterlagen des DE-GM 87 04 976.

Bei den Durchführungen der vorstehend erläuterten Art sind die Elektroden durch Einbettung in den Werkstoff der Durchführung abgestützt. Dies geschieht in der Regel in der Weise, daß bei der Herstellung der Durchführung die Elektrode in geeigneter Weise positioniert und dann beim Ausfüllen der Form mit der Harzmischung umschlossen wird. Um eine fugenfreie Verbindung zwischen der Elektrode und der Harzmischung nach deren Aushärtung zu erreichen, ist es auch bekannt, den Elektrodenkörper nicht aus Metall, sondern aus einem leitfähigen Elastomer herzustellen. Demgegenüber liegt der Erfindung die Aufgabe zugrunde, den Aufwand für die Positionierung der Elektrode und für die Elektrode selbst zu verringern und damit zu einer kostengünstigen Ausführung einer Durchführung mit Spannungsabgriff zu gelangen.

Diese Aufgabe wird gemäß der Erfindung bei einer Durchführung der eingangs genannten Art dadurch gelöst, daß die Durchführung eine konzentrisch zu dem Leiter angeordnete Nut besitzt und daß die Elektrode zur Aufnahme in der Nut einen der Nut angepaßten Durchmesser besitzt, wobei der Anschlußleiter mit seinem inneren Ende in die Nut hineinragt. Hierdurch ist die Herstellung der Durchführung wesentlich vereinfacht, da es nur noch erforderlich ist, den Anschlußleiter in die Harzmischung einzubetten. Da sich der Anschlußleiter nur über einen sehr kleinen Teil des Umfanges der Durchführung erstreckt, ist seine gasdichte und fugenfreie Einbettung problemlos durchführbar. Nach der Fertigstellung des Durchführungskörpers kann die als Spannungsabgriff dienende Elektrode in die Nut eingesteckt und damit zugleich in leitende Verbindung mit dem Anschlußleiter gebracht werden.

Nach einer vorteilhaften Ausgestaltung der Erfindung kann die Nut eine axiale Erstreckung besitzen. Die ermöglicht es, eine glatte zylindrische Elektrode zu verwenden. Ein ausreichender mechanischer Halt der Elektrode in der Nut ist insbesondere dadurch zu erreichen, daß die einander gegenüberliegenden Wandungen der Nut gegeneinander versetzte Vorsprünge aufweisen. Diese Vorsprünge können bis etwa zum mittleren Durchmesser der Nut reichen. Die Elektrode, die vorzugsweise aus einem in zylindrische Form gebogenen Blechstreifen bestehen kann, der einen Einschnitt zum Eingreifen des Anschlußleiters besitzt, wird unter leichter wellenförmiger Verformung zwischen den Vorsprüngen eingeklemmt.

Der Anschlußleiter kann als abgewinkeltes Blechteil ausgebildet sein, dessen innerer Schenkel in einer axialen Ebene liegt und Durchbrechungen zur Verankerungen in dem Werkstoff der Durchführung besitzt und dessen äußerer Schenkel in einer radialen Ebene liegt und an seinem äußeren Ende eine Anschlußfahne bildet. Ein zuverlässiger elektrischer Kontakt zwischen der z. B. als Blechring ausgebildeten Elektrode und dem Anschlußleiter ist dann dadurch erzielbar, daß die Elektrode an ihrem Rand einen mit Untermaß ausgeführten Einschnitt besitzt, der auf den in die Nut hineinragenden Teil des Anschlußleiters aufgedrückt wird.

Die Erfindung wird im folgenden anhand der Figuren näher erläutert.

Die Figur 1 zeigt im Schnitt eine Durchführung mit einem Spannungsabgriff sowie abgebrochen dargestellte angrenzende Bereiche einer Mittel- oder Hochspannungsschaltanlage.

In der Figur 2 ist ein Abschnitt eines Durchführungskörpers in der Draufsicht auf eine in der Figur 1 gezeigte Nut dargestellt.

Die Figur 3 zeigt einen Anschlußleiter in einer Seitenansicht und mit einer strichpunktiert dargestellten Kontur des Anschlußleiters als gestrecktes Blechteil.

Die Figur 4 zeigt eine Elektrode als gestrecktes Blechteil in verkürzter Darstellung.

Die Durchführung 1 dient in der Anordnung gemäß der Figur als Verbindungselement von zwei Kapselungsabschnitten 2 und 3 einer Mittel- oder Hochspannungsanlage etwa gemäß der DE-B-28 18 905 oder der DE-A-29 05 859. Die Gasräume beider Kapselungsabschnitte 2 und 3 werden nach außen durch Dichtungsringe 4 an den planen Stirnflächen 5 und 6 der Durchführung 1 abgedichtet. Miteinander kommunizieren die Gasräume durch Öffnungen 7 mit geringem Querschnitt in der Durchführung 1.

Um auf einfache Weise feststellen zu können, ob ein axial durch das Zentrum der Durchführung 1 verlaufend angeordneter Leiter 10 Hochspannung führt, besitzt die Durchführung 1 eine aus Blech bestehende Elektrode 11, die mit einem Anschlußleiter 12 in Verbindung steht. Der Anschlußleiter 12 ist als winkliges Blechteil ausgebildet und besitzt einen äußeren, in einer radialen Ebene liegenden Schenkel 13, dessen Ende aus dem aus einer ausgehärteten Harzmischung bestehenden Durchführungskörper 14 seitlich herausragt und dort eine Anschlußfahne 15 bildet. Ein innerer Schenkel 16 des Anschlußleiters 12 erstreckt sich in einer axialen Ebene und ist mit Durchbrechungen 17 zur Verankerung in dem Werkstoff des Durchführungskörpers 14 versehen. Das Ende des Schenkels 16 reicht bis in eine Nut 20, die sich in axialer Richtung erstreckt und die den Durchführungsleiter 10 konzentrisch umgibt.

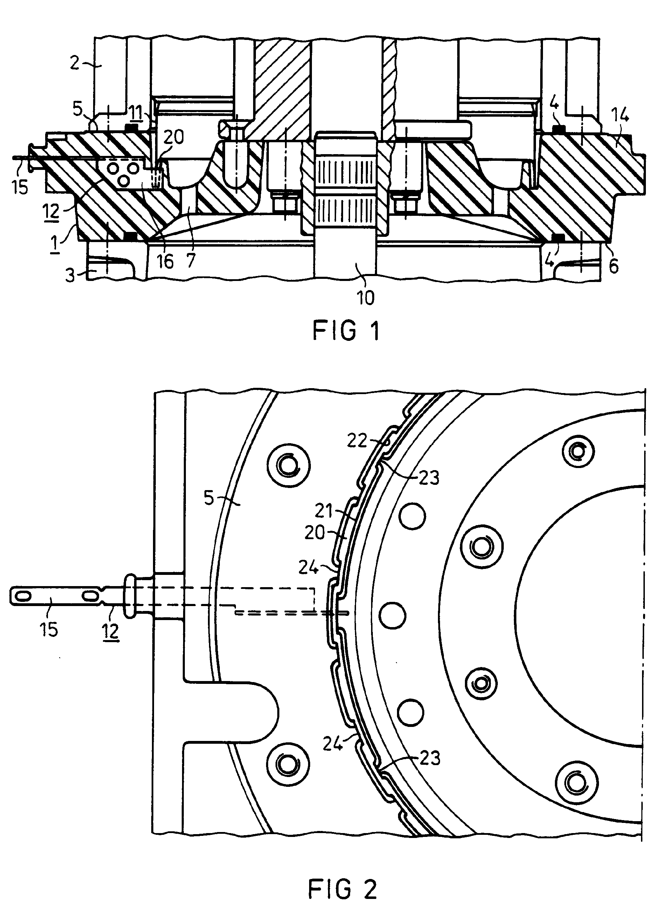

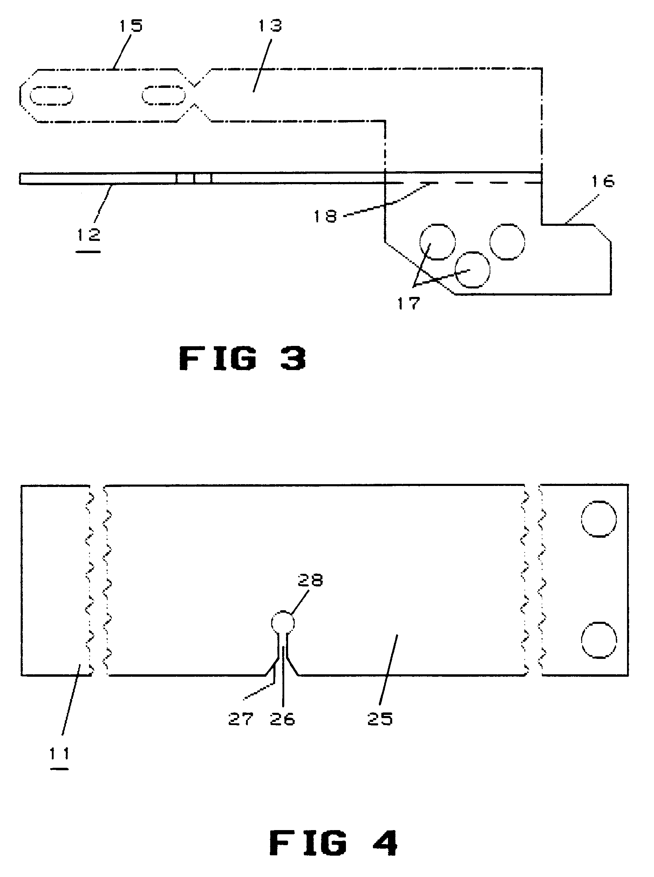

Der Anschlußleiter 12 ist als Einzelteil in der Figur 3 dargestellt. Dabei ist zur Ergänzung strichpunktiert der Umriß des ebenen Blechteiles gezeigt, welches nach Abkantung um eine Biegekante 18 den Anschlußleiter gemäß der Figur 1 ergibt.

Wie die Figur 1 zeigt, taucht die Elektrode 11 mit ihrem Rand in die Nut 20 ein und ist hierdurch relativ zu dem Durchführungsleiter 10 genau positioniert. Einzelheiten der Nut 20 zeigt die Figur 2. Die Nut 20 besitzt eine innere Wandung 20 und eine äußere Wandung 22. Beide Wandungen 21 bzw. 22 sind mit Vorsprüngen 23 bzw. 24 versehen. Diese Vorsprünge sind in Umfangsrichtung gegeneinander versetzt und sind etwa derart bemessen, daß sie bis zum mittleren Durchmesser der Nut 20 reichen. Beim Einsetzen der Elektrode 11 wird deren Rand aufgrund der Vorsprünge in einer leichten Wellenlinie elastisch vorgespannt und hierdurch zentriert und durch Klemmsitz festgehalten.

Die elektrische Verbindung zwischen der Elektrode 11 und dem Anschlußleiter 12 wird ohne besondere Vorkehrungen dadurch bewirkt, daß ein in der Figur 4 gezeigter Einschnitt 26, dessen Mündung am Rand der Elektrode 11 mit einer Abschrägung 27 versehen ist, auf den inneren Schenkel 16 des Anschlußleiters 12 aufgeschoben wird. An seinem inneren Ende ist der Einschnitt 26 zur Entlastung des Werkstoffes der Elektrode 11 mit einer abgerundeten Erweiterung 28 versehen. Wie die Figur 4 noch zeigt, ist die Elektrode 11 aus einem Blechstreifen 25 gebildet, der nach enstprechender Biegung eine zylindrische Form entsprechend der Figur 1 annimmt. Dabei ist es nicht erforderlich, den Blechstreifen vor der Montage in die zylindrische Gestalt zu bringen. Vielmehr kann die Biegung im Zuge des Einsteckens des Blechstreifen 25 in die Nut 20 erfolgen.

Dadurch, daß die Elektrode 11 im Unterschied zu den bekannten Durchführungen mit Spannungsabgriff oder kapazitiven Spannungswandlern nicht in den Durchführungskörper eingebettet ist, entfallen Schwierigkeiten hinsichtlich der fugenlosen Verbindung zwischen der Elektrode und dem Werkstoff des Durchführungskörpers. Ferner ist es möglich, entsprechend dem Energiebedarf der vorgesehenen Spannungsanzeigevorrichtung eine kleinere oder größere Elektrode zu verwenden.

## Patentansprüche

1. Durchführung (1) für eine gasisolierte, gekapselte Mittel- oder Hochspannungs-Schaltanlage, mit einem axial in der Kapselung (2, 3) angeordneten spannungführenden Leiter (10) und einer konzentrisch zu diesem isoliert am Durchführungskörper (14) abgestützten Elektrode (11) sowie mit einem nach außen hindurchgeführten Anschlußleiter (12) für die Elektrode (11), **dadurch gekennzeichnet**, daß die Durchführung (1) eine konzentrisch zu dem Leiter (10) angeordnete Nut (20) besitzt und daß die Elektrode (11) zur Aufnahme in der Nut (20) einen der Nut (20) angepaßten Durchmesser besitzt, wobei der Anschlußleiter (12) mit seinem inneren Ende in die Nut (20) hineinragt.

2. Durchführung nach Anspruch 1, **dadurch gekennzeichnet,** daß die Nut (20) eine axiale Erstreckung besitzt.

3. Durchführung nach Anspruch 2, **dadurch gekennzeichnet**, daß die einander gegenüberliegenden Wandungen (21, 22) der Nut (20) gegeneinander versetzte Vorsprünge (23, 24) aufweisen.

4. Durchführung nach Anspruch 3, **dadurch gekennzeichnet**, daß die Vorsprünge (23, 24) bis etwa zum mittleren Durchmesser der Nut (20) reichen.

5. Durchführung nach einem der vorangehenden Ansprüche , **dadurch gekennzeichnet**, daß die Elektrode (11) aus einem in zylindrische Form gebogenen Blechstreifen (25) besteht, der einen Einschnitt (26) zum Eingreifen des Anschlußleiters (12) besitzt.

6. Durchführung nach einem der vorangehenden Ansprüche , **dadurch gekennzeichnet,** daß der Anschlußleiter (12) als abgewinkeltes Blechteil ausgebildet ist, dessen innerer Schenkel (16) in einer axialen Ebene liegt und Durchbrechungen (17) zur Verankerung in dem Werkstoff der Durchführung (1) besitzt und dessen äußerer Schenkel (13) in einer radialen Ebene liegt und an seinem äußeren Ende eine Anschlußfahne (15) bildet.

## Claims

1. Bushing (1) for a gas-insulated, enclosed medium-voltage or high-voltage switchgear unit having a voltage-carrying conductor (10) disposed axially in the enclosure (2, 3) and an electrode (11) supported in an insulated manner concentrically with respect to the latter on the body of the bushing (14), and having a connecting conductor (12) for the electrode (11), which connecting conductor (12) is fed through to the outside, characterized in that the bushing (1) has a groove (20) disposed concentrically with respect to the conductor (10) and in that, for the purpose of reception in the groove (20), the electrode (11) has a diameter matched to the groove (20), the inner end of the connecting conductor (12) projecting into the groove (20).

2. Bushing according to Claim 1, characterized in that the groove (20) has an axial extension.

3. Bushing according to Claim 2, characterized in that the mutually opposite walls (21, 22) of the groove (20) have mutually offset projections (23, 24).

4. Bushing according to Claim 3, characterized in that the projections (23, 24) extend approximately up to the mean diameter of the groove (20).

5. Bushing according to one of the preceding claims, characterized in that the electrode (11) comprises a sheet-metal strip (25) which is bent into cylindrical shape and which has an incision (26) for the connecting conductor (12) to be inserted into.

6. Bushing according to one of the preceding claims, characterized in that the connecting conductor (12) is designed as an angled sheet-metal part whose inner limb (16) is situated in an axial plane and has perforations (17) for anchoring in the material of the bushing (1) and whose outer limb (13) is situated in a radial plane and forms a connecting lug (15) at its outer end.

## Revendications

1. Traversée (1) pour appareillage à moyenne tension ou à haute tension, isolé par gaz et enveloppé, comportant un conducteur (10) placé sous tension et disposé axialement dans l'enveloppe (2,3), et une électrode (11) en appui sur le corps de traversée (14) et isolée concentriquement par rapport à ce conducteur, ainsi qu'un conducteur de raccordement (12), qui ressort extérieurement, pour l'électrode (11), caractérisée par le fait que la traversée (1) possède une rainure (20) disposée concentriquement par rapport au conducteur (10), et que l'électrode (11) possède un diamètre adapté à la rainure (20), pour être logée dans cette dernière, le conducteur de raccordement (12) pénétrant par son extrémité intérieure dans la rainure (20).

2. Traversée suivant la revendication 1, caractérisée par le fait que la rainure (20) possède une étendue axiale.

3. Traversée suivant la revendication 2, caractérisée par le fait que les parois (21,22) de la rainure (20), qui sont situées réciproquement en vis-à-vis, possèdent des parties saillantes (23,24) réciproquement décalées.

4. Traversée suivant la revendication 3, caractérisée par le fait que les parties saillantes (23,24) s'étendent jusqu'approximativement au diamètre moyen de la rainure (20).

5. Traversée suivant l'une des revendications précédentes, caractérisée par le fait que l'électrode (11) est constituée par une bande de tôle (25) qui est repliée avec une forme cylindrique et qui possède une encoche (26) pour l'engagement du conducteur (12) de raccordement.

6. Traversée suivant l'une des revendications précédentes, caractérisée par le fait que le conducteur de raccordement (12) est réalisé sous la forme d'une pièce en tôle coudée, dont la branche intérieure (16) est située dans un plan axial et possède des passages (17) pour son accrochage dans le matériau de la traversée (1) et dont la branche extérieure (13) est située dans un plan radial et forme, à son extrémité extérieure, une languette de raccordement (15).
